(19) Europäisches Patentamt
European Patent Office
Office européen des brevets

(11) Veröffentlichungsnummer : **0 025 542**
**B1**

(12) # EUROPÄISCHE PATENTSCHRIFT

(45) Veröffentlichungstag der Patentschrift : **16.02.83**

(51) Int. Cl.³ : **C 07 C121/75**, C 07 C 67/14, C 07 C 69/743, A 01 N 53/00

(21) Anmeldenummer : **80105192.1**

(22) Anmeldetag : **01.09.80**

(54) **(+/-)-trans-3-(E,Z-2-Chlor-2-(4-chlor-phenyl)-vinyl)-,2,2-dimethyl-cyclopropancarbonsäure-(+/-)-(alpha-cyano-3-phenoxy-4-fluorbenzyl)-ester, die einzelnen E- und Z-Isomeren, Verfahren zur Herstellung dieser Verbindungen, ihre Verwendung als Ektoparasitizide und ihre Zwischenprodukte.**

(30) Priorität : **12.09.79 DE 2936864**

(43) Veröffentlichungstag der Anmeldung : **25.03.81 Patentblatt 81/12**

(45) Bekanntmachung des Hinweises auf die Patenterteilung : **16.02.83 Patentblatt 83/07**

(84) Benannte Vertragsstaaten : **AT BE CH DE FR GB IT LI NL SE**

(56) Entgegenhaltungen :
**EP A 0 000 345**
**FR A 2 362 588**

(73) Patentinhaber : **BAYER AG**
**Zentralbereich Patente, Marken und Lizenzen**
**D-5090 Leverkusen 1, Bayerwerk (DE)**

(72) Erfinder : **Fuchs, Rainer, Dr.**
**Roeberstrasse 8**
**D-5000 Wuppertal 1 (DE)**
Erfinder : **Gallenkamp, Bernd, Dr.**
**Claudiusweg 5**
**D-5600 Wuppertal 1 (DE)**
Erfinder : **Stendel, Wilhelm, Dr.**
**Inden Birken 55**
**D-5600 Wuppertal 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

(+/-)-trans-3-(E,Z-2-Chlor-2-(4-chlor-phenyl)-vinyl)-,2,2-dimethyl-cyclopropancarbonsäure-(+/-)-(alpha-cyano-3-phenoxy-4-fluorbenzyl)-ester, die einzelnen E- und Z-Isomeren, Verfahren zur Herstellung dieser Verbindungen, ihre Verwendung als Ektoparasitizide und ihre Zwischenprodukte

Die Erfindung betrifft das neue E, Z-Isomerengemisch von (±)-trans-3-(E, Z-2-Chlor-2-(4-chlor-phenyl)-vinyl)-2,2-dimethyl-cyclopropancarbonsäure(±)-(α-cyano-3-phenoxy-4-fluor-benzyl)-ester sowie die einzelnen E- und Z-Isomeren aus dem Gemisch, Verfahren zur Herstellung dieser Verbindungen und ihre Verwendung als Ektoparasitizide.

Es ist bereits bekannt, daß Gemische der (±)-cis- und (±)-trans-Formen von 3-(E, Z-2-Chlor-2-(4-chlor-phenyl)-vinyl)-2,2-dimethyl-cyclopropan-1-carbonsäure-(±)-(α-cyano-3-phenoxy-4-fluor-benzyl)-ester insektizid und akarizid wirksam sind (vergleiche Beispiel 17 der Deutschen Offenlegungsschrift 2 730 515).

Es wurden nun das E, Z-Isomerengemisch von (±)-trans-3-(2-Chlor-2-(4-chlor-phenyl)-vinyl)-2,2-dimethyl-cyclopropan-1-carbonsäure-(±)-(α-cyano-3-phenoxy-4-fluor-benzyl)-ester der Formel I

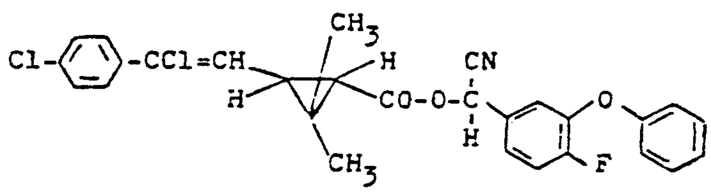

(I)

sowie das E-Isomere der Formel Ia

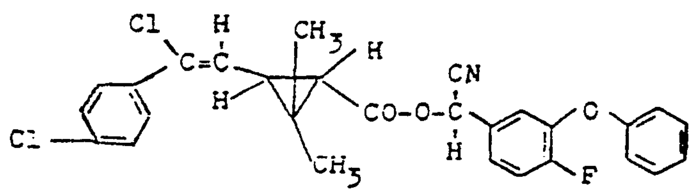

(Ia)

und das Z-Isomere der Formel Ib

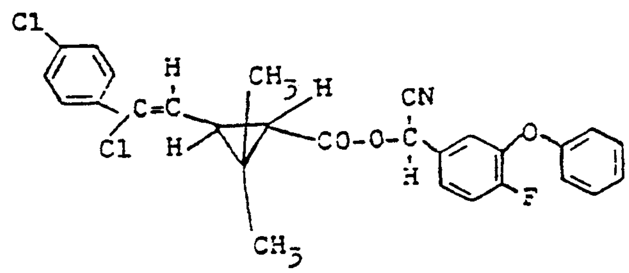

(Ib)

gefunden.

Man erhält die neuen Verbindungen der Formeln (I), (Ia) und (Ib), wenn man das E, Z-Isomerengemisch von (±)-trans-3-(2-Chlor-2-(4-chlor-phenyl)-vinyl)-cyclopropan-1-carbonsäurechlorid der Formel II

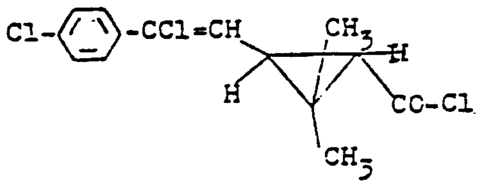

(II)

bzw. das E-Isomere der Formel IIa

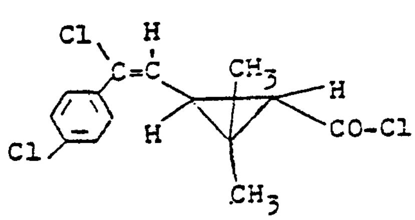

(IIa)

bzw. das Z-Isomere der Formel IIb

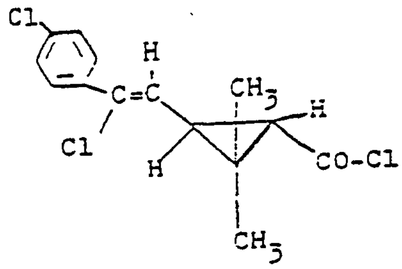

(IIb)

mit 3-Phenoxy-4-fluor-benzaldehyd der Formel III

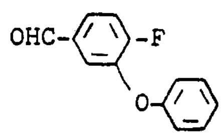

(III)

in Gegenwart von wenigstens der äquimolaren Menge eines Alkalicyanids, gegebenenfalls in Gegenwart eines Katalysators und gegebenenfalls unter Verwendung von Verdünnungsmitteln, bei Temperaturen zwischen 0 und 100 °C umsetzt.

Eine weitere Möglichkeit zur Herstellung des E-Isomeren der Formel Ia und des Z-Isomeren der Formel Ib besteht darin, daß man das E,Z-Isomerengemisch von (±)-trans-3-(2-Chlor-2(4-chlor-phenyl)-vinyl)-2,2-dimethyl-cyclopropan-1-carbonsäure-(±)-(α-cyano-3-phenoxy-4-fluorbenzyl)-ester der Formel I nach an sich bekannten Methoden in die Einzelkomponenten auftrennt.

Die neuen Verbindungen der Formeln (I), (Ia) und (Ib) zeichnen sich durch hohe insektizide und akarizide Wirksamkeit aus.

Überraschenderweise zeigen die neuen Verbindungen eine erheblich höhere insektizide und akarizide, insbesondere ektoparasitizide Wirkung als aus dem Stand der Technik bekannte Isomerengemische von 3-(2-Chlor-2-(4-chlorphenyl)-vinyl)-2,2-dimethyl-cyclopropan-1-carbonsäure-(α-cyano-3-phenoxy-4-fluor-benzyl)-ester.

Die bei der Herstellung des E, Z-Isomerengemisches der Formel (I) ablaufende Reaktion kann durch folgendes Formelschema skizziert werden :

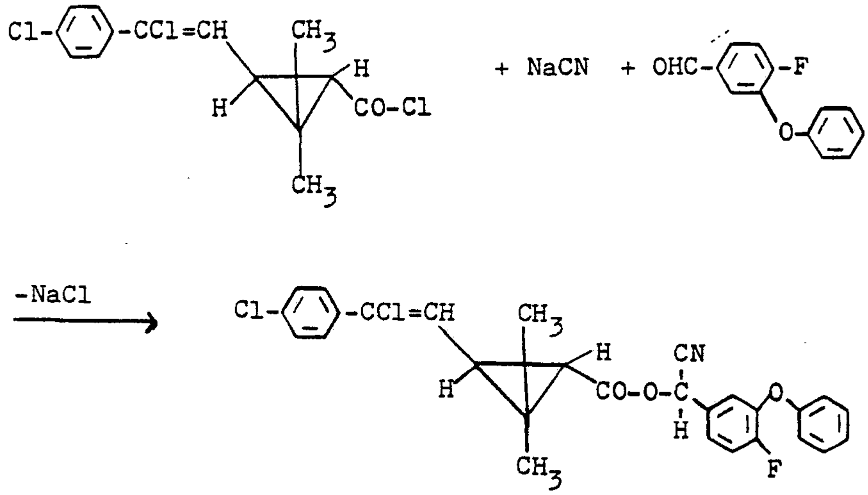


Die als Ausgangsstoffe zu verwendenden Säurechloride der Formeln (II), (IIa) und (IIb) sind noch nicht in der Literatur beschrieben. Man erhält diese neuen Verbindungen, wenn man das E, Z-Isomerengemisch von (±)-trans-3-(2-Chlor-2-(4-chlor-phenyl)-vinyl)-2,2-dimethyl-cyclopropan-1-carbonsäure der Formel IV

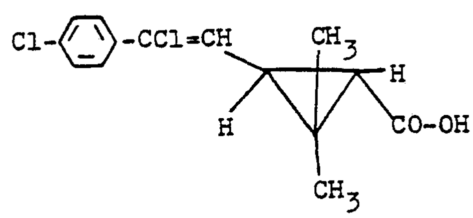

(IV)

bzw. das E-Isomere der Formel IVa

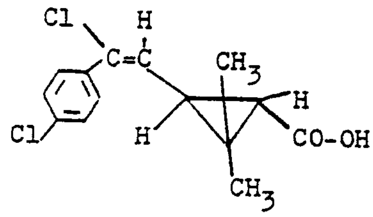

(IVa)

bzw. das Z-Isomere der Formel IVb

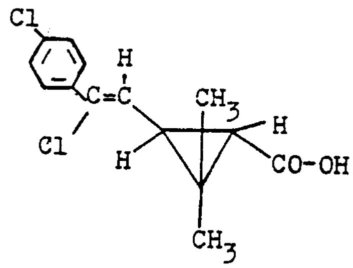

(IVb)

mit einem Chlorierungsmittel, wie z. B. Thionylchlorid, gegebenenfalls in Gegenwart eines Verdünnungsmittels, wie z. B. Tetrachlorkohlenstoff, bei Temperaturen zwischen 10 und 100 °C umsetzt.

Die Säuren der Formeln (IV), (IVa) und (IVb) sind noch nicht in der Literatur beschrieben.

(±)-trans-3-(E, Z-2-Chlor-2(4-chlor-phenyl)-vinyl)-2,2-dimethyl-cyclopropan-1-carbonsäure der Formel (IV) erhält man durch Verseifung von entsprechenden Alkylestern der Formel V

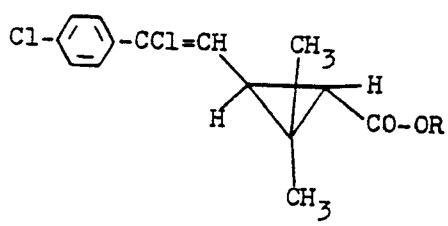

(V)

in welcher

R für $C_1$-$C_4$-Alkyl steht,

nach üblichen Methoden, beispielsweise, indem man die Ester mit Alkalilaugen, wie z. B. wässrigalkoholischer Natronlauge auf Temperaturen zwischen 50 und 100 °C erhitzt. Zur Aufarbeitung wird gegebenenfalls der Alkohol abdestilliert und das Produkt mit einem mit Wasser nicht mischbaren Lösungsmittel, wie z. B. Methylenchlorid, extrahiert und das Extraktionsmittel unter vermindertem Druck abdestilliert.

Als Beispiele für die Ester der Formel (V) seien genannt : (±)-trans-3-(E, Z-2-Chlor-2-(4-chlor-phenyl)-vinyl)-cyclopropan-1-carbonsäure-methylester, -ethylester, -n-propylester, -iso-propylester, -n-butylester, -isobutylester, -sek.-butylester und -tert.-butylester.

Die Ester der Formel (V) sind noch nicht in der Literatur beschrieben. Man erhält sie, indem man (±)-trans-3-Formyl-2,2-dimethyl-cyclopropan-1-carbonsäureester der Formel VI

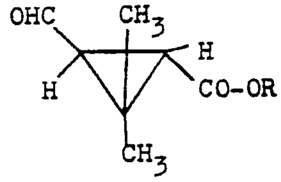

(VI)

in welcher

R für $C_1$-$C_4$-Alkyl steht,

mit 4-Chlor-α-chlor-benzyl-phosphonsäureestern der Formel VII

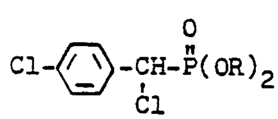

(VII)

in welcher

R für $C_1$-$C_4$-Alkyl steht,

in Gegenwart von Basen, wie z. B. Natriummethylat, gegebenenfalls in Gegenwart von Verdünnungsmitteln, wie z. B. Ethanol und/oder Tetrahydrofuran, bei Temperaturen zwischen − 10 und + 50 °C umsetzt. Zur Aufarbeitung wird mit Wasser verdünnt und mit einem mit Wasser nicht mischbaren Lösungsmittel, wie z. B. Methylenchlorid, extrahiert. Die Extrakte werden getrocknet, filtriert und das Lösungsmittel wird unter vermindertem Druck abdestilliert.

Ester der Formel (VI) sind bereits bekannt (vergleiche DE-OS 2 615 160). Als Beispiele seien genannt : (±)-trans-3-Formyl-2,2-dimethyl-cyclopropan-1-carbonsäure-methylester, -ethylester, -n-propylester, -isopropylester, -n-butylester, -iso-butylester, -sek.-butylester und -tert.-butylester.

Die Herstellung von 4-Chlor-α-chlor-benzyl-phosphonsäureestern der Formel (VII) ist Gegenstand einer älteren, nicht vorveröffentlichten Patentanmeldung (vergleiche P 2 827 101).

Man erhält diese Verbindungen ausgehend vom bekannten 4-Chlor-benzaldehyd gemäß folgendem Formelschema :

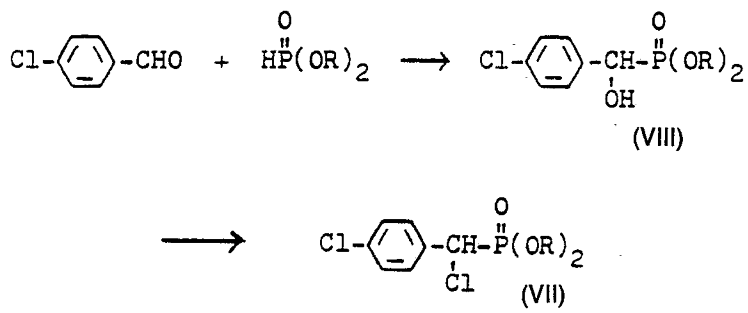

(VIII)

(VII)

Durch Umsetzung von 4-Chlor-benzaldehyd mit Phosphorigsäureestern, z. B. mit Phosphorigsäurediethylester, gegebenenfalls in Gegenwart eines Katalysators, wie z. B. Triethylamin, bei Temperaturen zwischen 20 und 100 °C, erhält man 4-Chlor-α-hydroxy-benzyl-phosphonsäure-ester der Formel (VIII). Diese können durch Umsetzung mit Chlorierungsmitteln, wie z. B. mit Thionylchlorid, bei Temperaturen zwischen 20 und 100 °C in die 4-Chlor-α-chlor-benzyl-phosphonsäureester der Formel (VII) umgewandelt werden.

Als Beispiele für die Verbindungen der Formel (VII) seien genannt :

4-Chlor-α-chlor-benzyl-phosphonsäure-dimethylester, -diethylester, di-isopropylester und di-sek.-butylester.

3-Phenoxy-4-fluor-benzaldehyd der Formel (III), welcher zur Herstellung der neuen Verbindungen der Formeln (I), (Ia) und (Ib) als Ausgangsverbindung einzusetzen ist, ist bereits bekannt (vergleiche DE-OS 2 709 264).

Alkalicyanide, welche zur Herstellung der neuen Verbindungen der Formeln (I), (Ia) und (Ib) zu verwenden sind, sind vorzugsweise Natriumcyanid und Kaliumcyanid.

Das Verfahren zur Herstellung der neuen Verbindungen der Formeln (I), (Ia) und (Ib) wird vorzugsweise unter Verwendung von Verdünnungsmitteln durchgeführt. Als solche kommen praktisch alle inerten organischen Solventien infrage. Hierzu gehören insbesondere aliphatische und aromatische, gegebenenfalls chlorierte Kohlenwasserstoffe, wie Pentan, Hexan, Heptan, Cyclohexan, Benzol, Toluol, Xylol, Methylenchlorid, Chloroform, Tetrachlorkohlenstoff, Chlorbenzol und o-Dichlorbenzol, Ether wie Diethyl- und Dibutylether, Tetrahydrofuran, und Dioxan, Ketone wie Aceton, Methylethyl-, Methyl-isopropyl- und Methylisobutylketon sowie Nitrile wie Acetonitril und Propionitril.

Vorzugsweise werden von den oben genannten Lösungsmitteln die mit Wasser nicht mischbaren in Kombination mit Wasser als zweiter Solvenskomponente verwendet, d. h. das Verfahren wird in einem zweiphasigen Medium durchgeführt.

Hierbei können als Katalysatoren Verbindungen verwendet werden, welche gewöhnlich bei Reaktionen in mehrphasigen Medien als Hilfsmittel zum Phasentransfer von Reaktanden dienen. Insbesondere seien Tetraalkyl- und Trialkyl-aralkyl-ammoniumsalze, wie z. B. Tetrabutylammoniumbromid, Methyltrioctylammoniumchlorid und Trimethylbenzylammoniumhydrogensulfat genannt.

Die Reaktionstemperatur wird im allgemeinen zwischen 0 und 100 °C, vorzugsweise zwischen 10 und 50 °C gehalten. Das Herstellungsverfahren wird gewöhnlich bei Normaldruck durchgeführt.

Zur Durchführung des erfindungsgemäßen Verfahrens werden die Ausgangsstoffe gewöhnlich in äquimolaren Mengen eingesetzt. Ein Überschuß der einen oder anderen Reaktionskomponente bringt keine wesentlichen Vorteile. Die Umsetzung wird im allgemeinen in geeigneten Verdünnungsmitteln gegebenenfalls in Gegenwart eines Katalysators durchgeführt und das Reaktionsgemisch wird mehrere Stunden bei der erforderlichen Temperatur gerührt. Danach gibt man ein organisches Lösungsmittel wie z. B. Toluol, zu und arbeitet die organische Phase wie üblich durch Waschen, Trocknen und Abdestillieren des Lösungsmittels auf.

Die neuen Verbindungen der Formeln (I), (Ia) und (Ib) fallen in öliger Form an und können nicht unzersetzt destilliert werden, jedoch durch sogenanntes « Andestillieren », d. h. durch längeres Erhitzen

unter vermindertem Druck auf mäßig erhöhte Temperaturen von den letzten flüchtigen Anteilen befreit und auf diese Weise gereinigt werden. Zu ihrer Charakterisierung dient das $^1$H-NMR-Spektrum.

E, Z-Isomerengemische der (±)-trans-3-(E, Z-2-Chlor-2-(4-chlor-phenyl)-vinyl)-2,2-dimethyl-cyclopropan-1-carbonsäure der Formel IV (oben), kann man trennen, indem man das E, Z-Isomerengemisch der Säure (IV) in einem mit Wasser nicht mischbaren Lösungsmittel, wie z. B. Methylenchlorid, löst, durch Zugabe von 0,001 bis 1, vorzugsweise 0,1 bis 1 Äquivalenten einer Base, wie z. B. wässriger Natronlauge, in X Schritten, wobei X für eine Zahl zwischen 1 und ∞, wobei ∞ eine kontinuierliche Arbeitsweise bedeutet, vorzugsweise aber für 2 bis 100 steht, in das Salz überführt, nach jeder Basenzugabe das Salz mit Wasser in X Schritten extrahiert, die einzelnen wässrigen Fraktionen mit einer Mineralsäure, wie z. B. Salzäure ansäuert, mit einem mit Wasser nicht mischbaren Lösungsmittel, wie z. B. Methylenchlorid, extrahiert, jeden einzelnen Extrakt nach üblichen Methoden, beispielsweise durch Trocknen, Filtrieren und Abdestillieren des Lösungsmittels aufarbeitet und die Fraktionen, in denen eines der Isomeren der Formeln (IVa) oder (IVb) nach NMR-spektroskopischer Analyse überwiegt, aus einem organischen Lösungsmittel, vorzugsweise einem Kohlenwasserstoff mit 5 bis 10 Kohlenstoffatomen, umkristallisiert.

E, Z-Isomerengemische der (±)-trans-3-(E, Z-2-Chlor-2(4-chlor-phenyl)-vinyl)-2,2-dimethyl-cyclopropan-1-carbonsäure der Formel IV (oben) kann man trennen, indem man das E, Z-Isomerengemisch der Säure (IV) in einer Wässrigen Alkalilauge, wie z. B. Natronlauge, löst, welche genau ein Basenäquivalent enthält, durch Zugabe von 0,001 bis 1, vorzugsweise von 0,1 bis 1 Äquivalenten einer Mineralsäure in X Schritten, wobei X fur eine Zahl zwischen 1 und ∞, wobei ∞ eine Kontinuierliche Arbeitsweise bedeutet, vorzugsweise aber zwischen 2 und 100 steht, wieder die Säure erzeugt, nach jeder Säurezugabe mit einem mit Wasser nicht mischbaren organischen Lösungsmittel, wie z. B. Methylenchlorid, extrahiert, jeden einzelnen Extrakt nach üblichen Methoden, beispielsweise durch Trocknen, Filtrieren und Abdestillieren des Lösungsmittels, auf-arbeitet und die Fraktionen, in denen eines der Isomeren der Formeln (IVa) oder (IVb) nach NMR-spektroskopischer Analyse überwiegt, aus einem organischen Lösungsmittel, vorzugsweise einem Kohlenwasserstoff mit 5 bis 10 Kohlenstoffatomen, umkristallisiert.

Die erfindungsgemäßen Wirkstoffe zeigen bei geringer Warmblütertoxizität eine starke und schnell einsetzende ektoparasitizide (insektizide und akarizide) Wirkung, insbesondere gegen Akariden, die als tierische Ektoparasiten domestizierte Tiere wie Rinder, Schafe und Kaninchen befallen. Sie eignen sich daher sehr gut zur Bekämpfung von tierischen Ektoparasiten aus der Klasse der Akariden.

Die erfindungsgemäßen Wirkstoffe können in die üblichen Formulierungen übergeführt werden, wie Lösungen, Emulsionen, Spritzpulver, Suspensionen, Pulver, Stäubemittel, Schäume, Pasten, lösliche Pulver, Granulate, Aerosole, Suspensions-Emulsionskonzentrate, Saatgutpuder, Wirkstoff-imprägnierte Natur- und synthetische Stoffe, Feinstverkapselungen in polymeren Stoffen.

Diese Formulierungen werden in bekannter Weise hergestellt, z. B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z. B. auch organische Lösungsmittel als Hilfslösungsmittel verwendet werden. Als flüssige Lösungsmittel kommen im wesentlichen in Frage : Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine. z. B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser ; mit verflüssigten gasförmigen Streckmitteln oder Trägerstoffen sind solche Flüssigkeiten gemeint, welche bei normaler Temperatur und unter Normaldruck gasförmig sind, z. B. Aerosol-Treibgase, wie Halogenkohlenwasserstoffe sowie Butan, Propan, Stickstoff und Kohlendioxid ; als feste Trägerstoffe : natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate ; als feste Trägerstoffe für Granulate : gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehle, Kokosnußschalen, Maiskolben und Tabakstengel ; als Emulgier- und/oder schaumerzeugende Mittel : nichtionogene und anionische Emulgatoren, wie Polyoxyethylen-Fettsäure-Ester, Polyoxyethylen-Fettalkohol-Ether, z. B. Alkylaryl-polyglykol-ether, Alkylsulfonate, Alkylsulfate, Arylsufonate sowie Eiweißhydrolysate ; als Dispergiermittel ; z. B. Lignin-Sulfitablagen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z. B. Eisenoxid, Titanoxid, Ferrocyanblau und organische Farbstoffe, wie Alizarin-, Azo-Metallphthalocyaninfarbstoffe und Spurennährstoffe wie Salze von Eisen, Mangan, Bor, Kupfer, Kobalt, Molybdän und Zink verwendet werden.

Die Anwendung der erfindungsgemäßen Wirkstoffe erfolgt in Form ihrer handelsüblichen Formulierungen und/oder den aus diesen Formulierungen bereiteten Anwendungsformen.

Der Wirkstoffgehalt der aus den handelsüblichen Formulierungen bereiteten Anwendungsformen

kann in weiten Bereichen variieren. Die Konzentration der Wirkstoffkombination der Anwendungsformen kann von 0,000 000 1 bis zu 100 Gew.-% Wirkstoff, vorzugsweise zwischen 0,000 1 und 10 Gew.-% liegen.

Die Anwendung geschieht in einer den Anwendungsformen angepaßten üblichen Weise.

Die Herstellung von Formulierungen der erfindungsgemäßen Wirkstoffkombinationen geschieht in an sich bekannter Art und Weise durch Zusammenmischen der Einzelkomponenten in den individuell erforderlichen Mengenverhältnissen, wobei der Reihenfolge der Zugabe von Wirkstoffen und Zuschlagstoffen sowie Formulierhilfsmittel im allgemeinen keine große Bedeutung zukommt.

Die Anwendung der erfindungsgemäßen Wirkstoffe geschieht im Veterinärsektor in bekannter Weise, wie durch orale Anwendung in Form von beispielsweise Tabletten, Kapseln, Tränken, Granulaten, durch dermale Anwendung in Form beispielsweise des Tauchens (Dippen), Sprühens (Sprayen), Aufgießens (pour-on and spot-on) und des Einpuderns sowie durch parenterale Anwendung in Form beispielsweise der Injektion.

## Beispiel I

Test mit Boophilus microplus resistent/In-vitro-Tauchtest

Lösungsmittel : 35 Gewichtsteile Ethylenglykolmonomethylether
35 Gewichtsteile Nonylphenolpolyglykolether

Zur Herstellung einer zweckmäßigen Wirkstoffzubereitung vermischt man drei Gewichtsteile Wirkstoff mit sieben Gewichtsteilen des oben angegebenen Lösungsmittel-Gemisches und verdünnt das so erhaltene Konzentrat mit Wasser auf die gewünschte Konzentration.

10 Adulte Boophilus microplus res. werden in die zu testende Wirkstoffzubereitung 1 Minute getaucht. Nach Überführung in Plastikbecher und Aufbewahrung in einem klimatisierten Raum wird der Abtötungsgrad bestimmt.

Bei diesem Test zeigen z. B. die folgenden Verbindungen der Herstellungsbeispiele überlegene Wirkung gegenüber dem Stand der Technik :

| Wirkstoff | Wirkstoffkonzentration in ppm a.i. | abtötende Wirkung in % in-vitro-Tauchtest Boophilus microplus (res. Biarra-Stamm) |
|---|---|---|
| bekannt: | | |
| Wirkstoff gemäß Beispiel 17 der DE-OS 2 730 515* | 8 | 100 |
| | 4 | 90 |
| | 2 | 80 |
| | 1 | 20 |
| | 0,5 | 10 |
| | 0,25 | 0 |
| erfindungsgemäß: | | |
| Wirkstoff gemäß Beispiel 3 der vorliegenden Anmeldung | 8 | 100 |
| | 4 | 100 |
| | 2 | 90 |
| | 1 | 65 |
| | 0,5 | 50 |
| | 0,25 | 50 |
| Wirkstoff gemäß Beispiel 1 der vorliegenden Anmeldung | 10 | 100 |
| | 3 | 100 |
| | 1 | 100 |
| | 0,3 | 100 |
| | 0,1 | 100 |

* Beim Beispiel 17 der DE-OS 2 730 515 handelt es sich um das Gemisch der (±)-cis und (±)-trans-Formen von 3-(E,Z-2-Chlor-2-(4-chlor-phenyl)-vinyl)-2,2-dimethyl-cyclopropan-1-carbonsäure-(±)-α-cyano-3-phenoxy-4-fluor-benzylester.

Beispiel II

Test mit parasitierenden, adulten Stechfliegen (Stomoxys calcitrans)

Lösungsmittel : 35 Gew.-Teile Ethylenglykolmonomethylether
+ 35 Gew.-Teile Nonylphenolpolyglykolether

Zur Herstellung einer zweckmäßigen Wirkstoffzubereitung vermischt man 3 Gew.-Teile Wirkstoff mit sieben Gewichtsteilen des oben angegebenen Lösungsmittels und verdünnt das so erhaltene Konzentrat mit Wasser auf die gewünschte Konzentration.

10 adulte Stechfliegen (Stomoxys calcitrans) werden in Petrischalen, die Sandwiches enthalten, und die einen Tag vor Versuchsbeginn mit 1 ml der zu testenden Wirkstoffzubereitung durchtränkt wurden, gebracht. Nach 3 Stunden wird der Abtötungsgrad in Prozent bestimmt, wobei 100 % bedeuten, daß alle und 0 %, daß keine Fliegen abgetötet worden sind.

| Wirkstoff | Wirkstoffkonzentration in ppm | abtötende Wirkung im in-vitro-Test adulte Stomoxys calcitrans |
|---|---|---|
| bekannt: | | |
| Wirkstoff gemäß Beispiel 17 der DE-OS 2 730 515 | 300 | 100 |
| | 100 | 0 |
| erfindungsgemäß: | | |
| Wirkstoff gemäß Beispiel 3 der vorliegenden Anmeldung | 300 | 100 |
| | 100 | 50 |
| | 30 | 50 |
| | 10 | 0 |
| Wirkstoff gemäß Beispiel 1 der vorliegenden Anmeldung | 300 | 100 |
| | 100 | 50 |
| | 30 | 0. |

Beispiel III

Test mit Psoroptes cuniculi

Lösungsmittel : 35 Gewichtsteile Ethylenglykolmonomethylether
35 Gewichtsteile Nonylphenolpolyglykolether

Zur Herstellung einer zweckmäßigen Wirkstoffzubereitung vermischt man drei Gewichtsteile Wirkstoff mit sieben Gewichtsteilen des oben angegebenen Lösungsmittel-Gemisches und verdünnt das so erhaltene Konzentrat mit Wasser auf die gewünschte Konzentration.

Etwa 10-25 Psoroptes cuniculi werden in 1 ml der zu testenden Wirkstoffzubereitung gebracht, die in Tablettennester einer Tiefziehpackung pipettiert wurden. Nach 24 Stunden wird der Abtötungsgrad bestimmt.

Bei diesem Test zeigen z. B. die folgenden Verbindungen der Herstellungsbeispiele überlegene Wirkung gegenüber dem Stand der Technik :

| Wirkstoff | Wirkstoffkonzentration in ppm | abtötende Wirkung im in-vitro-Test Psoroptes cuniculi |
|---|---|---|
| bekannt: | | |
| Wirkstoff gemäß Beispiel 17 der DE-OS 2 730 515 | 1 000 | 100 |
| | 300 | 0 |
| erfindungsgemäß: | | |
| Wirkstoff gemäß Beispiel 1 der vorliegenden Anmeldung | 100 | 100 |
| | 30 | 0 |

Herstellungsbeispiele

Beispiel 1

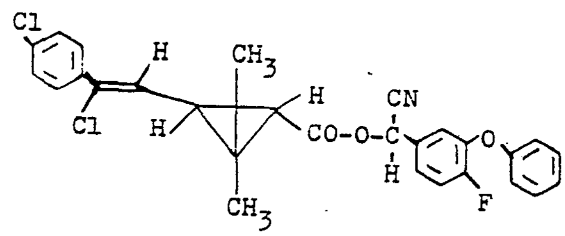

1,08 g (0,005 Mol) 3-Phenoxy-4-fluor-benzaldehyd und 1,52 g (0,005 Mol) (±)-trans-3-(Z-2-Chlor-2-(4-chlorphenyl)-vinyl)-2,2-dimethyl-cyclopropancarbonsäurechlorid werden zusammen unter Rühren bei 20-25 °C zu einer Mischung von 0,4 g Natriumcyanid, 0,6 ml Wasser, 20 ml n-Hexan und 0,1 g Tetrabutylammoniumbromid getropft und dann 4 Stunden bei 20-25 °C gerührt. Anschließend wird die Reaktionsmischung mit 100 ml Toluol versetzt und 2 mal mit je 60 ml Wasser ausgeschüttelt. Die organische Phase wird abgetrennt, über Magnesiumsulfat getrocknet und das Lösungsmittel im Wasserstrahlvakuum abdestilliert. Letzte Lösungsmittelreste werden durch kurzes Andestillieren bei 60 °C/l Torr Badtemperatur entfernt. Man erhält 1,8 g (70,6 % der Theorie) (±)-trans-3-(Z-2-Chlor-2-(4-chlor-phenyl)-vinyl)-2,2-dimethyl-cyclopropancarbonsäure-(±)-α-cyano-3-phenoxy-4-fluor-benzylester als zähes Öl. Die Struktur wird durch das $^1$H-NMR-Spektrum bestätigt.

$^1$H-NMR-Spektrum in $CDCl_3$/TMS, τ (ppm):
aromatische-H: 2,3-3,1 (m/12 H), benzyl-H: 3,60 (s/1/2 H) und 3,62 (s/1/2 H), vinyl-H: 4,14 (d/1 H), cyclopropan-H: 7,26-7,57 (m/1 H) und 8,26 (d/1 H), dimethyl-H: 8,50-8,80 (m/6 H).

Beispiel 2

Analog Beispiel 1 erhält man aus 3-Phenoxy-4-fluorbenzaldehyd und (±)-trans-3-(E-2-chlor-2-(4-chlorphenyl)-vinyl)-2,2-dimethyl-cyclopropancarbonsäurechlorid die Verbindung

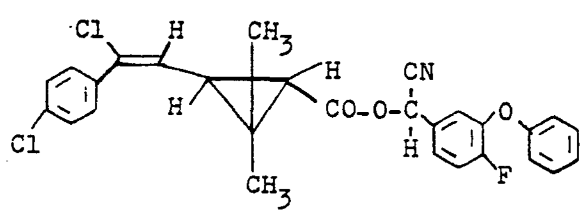

(±)-trans-3-(E-2-Chlor-2-(4-chlor-phenyl)-vinyl)-2,2-dimethyl-cyclopropancarbonsäure-(±)-α-cyano-3-phenoxy-4-fluor-benzylester.

$^1$H-NMR-Spektrum in $CDCl_3$/TMS, τ (ppm) :
aromatische-H : 2,3-3,1 (m/12 H), benzyl-H : 3,70 (S/1/2 H) und 3,72 (s/1/2 H), vinyl-H : 4,16-4,40 (m/1 H), cyclopropan-H : 7,64-8,07 (m/1 H) und 8,39 (d/1 H), dimethyl-H : 8,57-8,92 (m/6 H).

## Beispiel 3

Analog Beispiel 1 erhält man aus 3-Phenoxy-4-fluorbenzaldehyd und (±)-trans-3-(E,Z-2-chlor-2-(4-chlor-phenyl)-vinyl)-2,2-dimethyl-cyclopropancarbonsäurechlorid die Verbindung

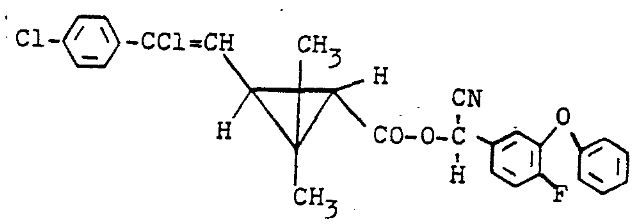

(±)-trans-3-(E, Z-2-Chlor-2-(4-chlor-phenyl)-vinyl)-2,2-dimethyl-cyclopropancarbonsäure-(±)-α-cyano-3-phenoxy-4-fluor-benzylester.

$^1$H-NMR-Spektrum in $CDCl_3$/TMS τ (ppm) :
aromatische-H : 2,3-3,1 (m/12 H), vinyl-H : 3,60-3,75 (m/1 H), vinyl-H : 4,07-4,40 (m/1 H), cyclopropan-H : 7,26-8,45 (m/2 H), dimethyl-H : 8,57-8,9 (m/6 H).

## Herstellung von Ausgangsprodukten

## Beispiel A1·

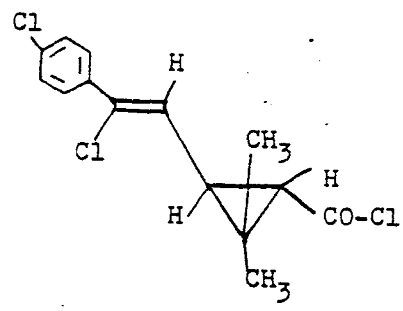

1,0 g (0,003 5 Mol) (±)-trans-3-(Z-2-Chlor-2-(4-chlor-phenyl)-vinyl)-2,2-dimethyl-cyclopropancarbonsäure werden in 20 ml Tetrachlorkohlenstoff gelöst und bei 25 °C langsam unter Rühren 5 ml Thionylchlorid zugetropft. Anschließend wird 4 Stunden zum Rückfluß erhitzt. Nach beendeter Reaktionszeit werden überchüssiges Thionylchlorid sowie Tetrachlorkohlenstoff im Wasserstrahlvakuum abdestilliert. Letzte Lösungsmittelreste werden durch kurzes Andestillieren bei 2 Torr/60 °C Badtemperatur entfernt. Man erhält 1,03 g (96,9 % der Theorie) (±)-trans-3-(Z-2-Chlor-2-(4-chlor-phenyl)-vinyl)-2,2-dimethyl-cyclopropancarbonsäurechlorid als ölige Flüssigkeit.

## Beispiel A2

Analog Beispiel A1) erhält man aus (±)-trans-3-(E-2-chlor-2-(4-chlor-phenyl)-vinyl)-2,2-dimethylcyclopropancarbonsäure und Thionylchlorid die Verbindung :

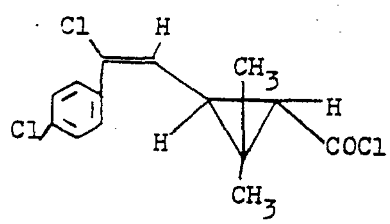

(±)-trans-3-(E-2-Chlor-2-(4-chlor-phenyl)-vinyl)-2,2-dimethyl-cyclopropancarbonsäurechlorid als ölige Flüssigkeit.

Beispiel A3

Analog Beispiel A1 erhält man aus (±)-trans-3-(E,Z-2-chlor-2-(4-chlor-phenyl)-vinyl)-2,2-dimethyl-cyclopropancarbonsäure und Thionylchlorid die Verbindung :

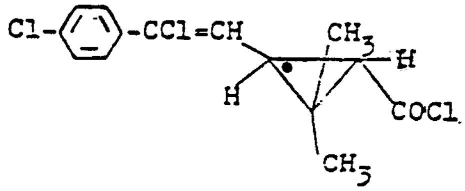

(±)-trans-3-(E,Z-2-Chlor-2-(4-chlor-phenyl)-vinyl)-2,2-dimethyl-cyclopropancarbonsäurechlorid als ölige Flüssigkeit.

Beispiel A4

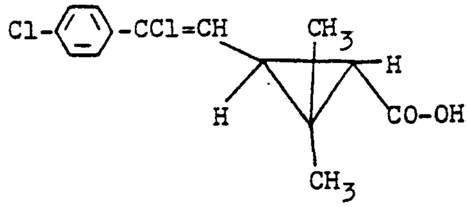

22,2 g (0,071 Mol) (±)-trans-3-(E, Z-2-Chlor-2-(4-chlor-phenyl)-vinyl)-2,2-dimethyl-cyclopropancarbonsäure-ethyl-ester werden in 100 ml Ethanol gelöst, dann mit einer Lösung von 5,7 g Natriumhydroxid in 100 ml Wasser versetzt und 4 Stunden unter Rühren zum Rückfluß erhitzt. Anschließend wird das Ethanol im Wasserstrahlvakuum abdestilliert, der Rückstand in 300 ml warmem Wasser aufgenommen und 1 mal mit 300 ml Methylenchlorid extrahiert. Die wässrige Phase wird abgetrennt, mit konzentrierter Salzsäure angesäuert und anschließend mit 2 mal 300 ml Methylenchlorid extrahiert. Die organische Phase wird abgetrennt über Magnesiumsulfat, getrocknet und das Lösungsmittel im Wasserstrahlvakuum abdestilliert. Letzte Lösungsmittelreste werden durch kurzes Andestillieren bei 2 Torr/60 °C Badtemperatur entfernt. Man erhält 15,5 g (76,6 % der Theorie) (±)-trans-3-(E, Z-2-Chlor-2-(4-chlor-phenyl)-vinyl)-2,2-dimethyl-cyclopropancarbonsäure als zähes Öl, das nach einiger Zeit kristallisiert und aus Acetonitril umkristallisiert bei 120-132 °C schmilzt.

Beispiel A5

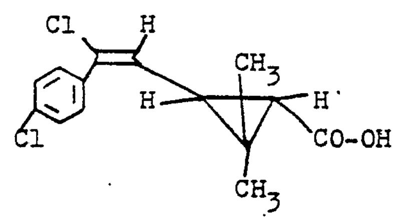

31,6 g (0,111 Mol) (±)-trans-(E, Z-2-Chlor-2-(4-chlor-phenyl)-vinyl)-2,2-dimethyl-cyclopropancarbonsäure mit einem E/Z-Verhältnis von 60/40, werden in 150 ml Methylenchlorid gelöst und mit einer Lösung von 0,885 g (0,022 Mol) Natriumhydroxid in 50 ml Wasser ausgeschüttelt. Anschließend wird die wässrige Phase abgetrennt. Dieser Vorgang wird anschließend noch 4 mal wiederholt. Man erhält so 5 Fraktionen einer wässrigen Salzlösung, die anschließend jede für sich mit konzentrierter Salzsäure angesäuert und anschließend mit je 2 mal 50 ml Methylenchlorid extrahiert werden. Die organischen Phasen werden abgetrennt, über Magnesiumsulfat getrocknet und dann das Lösungsmittel im Vakuum abgezogen. Man erhält so 5 Fraktionen obiger Säure mit unterschiedlichem E/Z-Verhältnis. Das E/Z-Verhältnis wird durch das $^1$H-NMR-Spektrum bestimmt.

Fraktion I : d. h. die zuerst abgetrennte Säure ergibt ein E/Z-Verhältnis von 50/50.

Fraktion V : ein E/Z-Verhältnis von 87/13.

Fraktion V (5 g) wird anschließend bei 30-40 °C in Cyclohexan gelöst. Durch stehenlassen bei Raumtemperatur kristallisiert (±)-trans-3-(E-2-Chlor-2-(4-chlor-phenyl)-vinyl)-2,2-dimethyl-cyclopropancarbonsäure in Form farbloser Kristalle vom Schmelzpunkt 138-139 °C aus.

Die Struktur wird durch das $^1$H-NMR-Spektrum bestätigt.

$^1$H-NMR-Spektrum in $CDCl_3$/TMS, τ (ppm) :

aromatische-H : 2,43-2,74 (m/4 H), vinyl-H : 4,24 (d/1 H), cyclopropan-H : 7,74-8,04 (m/1 H) und 8,39 (d/1 H),

dimethyl-H : 8,73 (s/6 H).

Beispiel A6

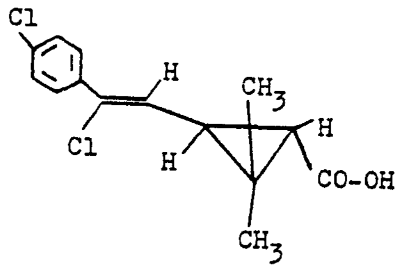

130,2 g (0,456 8 Mol) (±)-trans-(E,Z-2-Chlor-2-(4-chlor-phenyl)-vinyl)-2,2-dimethyl-cyclopropancarbonsäure, mit einem E/Z-Verhältnis von 60/40, werden in 500 ml Wasser suspendiert und unter Rühren durch Zusatz von 18,27 g (0,456 8 Mol) Natriumhydroxid gelöst in 100 ml Wasser, in das Natriumsalz übergeführt. Die wässrige Salzlösung wird mit 100 ml Methylenchlorid unterschichtet und unter heftigem Rühren mit 0,045 68 Mol Chlorwasserstoff in Form einer 37 %igen wässrigen Lösung, versetzt. Anschließend wird noch 5 Minuten gerührt und dann die Methylenchloridphase abgetrennt. Das Ansäuern und Abtrennen wird insgesamt noch 9 mal in der gleichen Weise wiederholt. Die 10 Methylenchloridphasen werden dann über Magnesiumsulfat getrocknet und anschließend das Lösungsmittel im Vakuum abgezogen. Man erhält so 10 Fraktionen obiger Säure mit unterschiedlichem E/Z-Verhältnis.

Das E/Z-Verhältnis wird durch das $^1$H-NMR-Spektrum bestimmt.

Fraktion I (zuerst abgetrennte Säure) hat ein E/Z-Verhältnis von 85/15.

Fraktion IX ein E/Z-Verhältnis von 40/60.

Fraktion IX (10,4 g) wird anschließend bei 30-40 °C in Cyclohexan gelöst. Durch stehenlassen bei Raumtemperatur kristallisiert (±)-trans-3-(Z-2-Chlor-2-(4-chlor-phenyl)-vinyl)-2,2-dimethyl-cyclopropancarbonsäure in Form farbloser Kristalle vom Schmelzpunkt 141-142 °C aus. Die Struktur wird durch das $^1$H-NMR-Spektrum bestätigt.

$^1$H-NMR-Spektrum in $CDCl_3$/TMS τ (ppm) :
aromatische-H : 2,37-2,81 (m/4 H), vinyl-H : 4,10 (d/1 H), cyclopropan-H : 7,26-7,56 (m/1 H) und 8,26 (d/1 H), dimethyl-H : 8,55 (s/3 H) und 8,70 (s/3 H).

Beispiel A7

Der als Ausgangsverbindung zu verwendende Ester der Formel V kann wie folgt hergestellt werden :

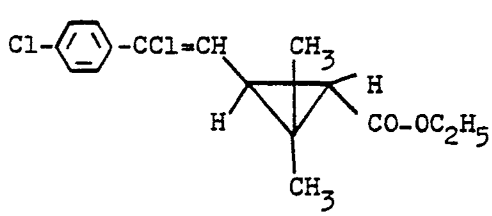

2,53 g (0,11 Mol) Natrium werden portionsweise in 50 ml Ethanol gelöst. Wenn sich alles Natrium aufgelöst hat, werden 150 ml Tetrahydrofuran (wasserfrei) zugesetzt und bei 0 °C unter Rühren 29,7 g (0, 1 Mol) 4-Chlor-α-chlor-benzyl-phosphonsäure-diethylester, gelöst in 30 ml wasserfreiem Tetrahydrofuran, zugetropft. Nachdem noch 2 Stunden bei 0-5 °C nachgerührt wurde, werden 17 g (0,1 Mol) (±)-trans-2,2-Dimethyl-3-formyl-cyclopropancarbonsäureethylester, gelöst in 30 ml wasserfreiem Tetrahydrofuran, unter Rühren bei 0 °C zugetropft. Anschließend wird noch 12 Stunden bei 20-25 °C nachgerührt. Die Reaktionsmischung wird dann mit 500 ml Wasser versetzt und 2 mal mit je 300 ml Methylenchlorid extrahiert. Die organische Phase wird abgetrennt, über Magnesiumsulfat getrocknet, das Lösungsmittel im Wasserstrahlvakuum abdestilliert und der Rückstand im Vakuum destilliert. Man erhält 23,2 g (74,1 % der Theorie) (±)-trans-3-(E, Z-2-Chlor-2-(4-chlor-phenyl)-vinyl)-2,2-dimethyl-cyclopropancarbonsäureethylester als gelbes Öl mit dem Siedepunkt 155-165 °C/l Torr.

**Ansprüche**

1. Isomerengemisch (±)-trans-3-(E,Z-2-Chlor-2-(4-chlor-phenyl)-vinyl)-2,2-dimethyl-cyclopropancarbonsäure-(±)-α-cyano-3-phenoxy-4-fluor-benzylester der Formel

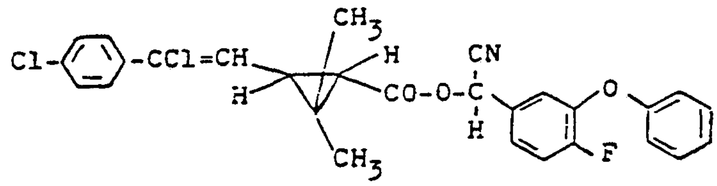

(I)

2. (±)-trans-3-(Z-2-Chlor-2-(4-chlor-phenyl)-vinyl)-2,2-dimethyl-cyclopropancarbonsäure-(±)-α-cyano-3-phenoxy-4-fluor-benzylester der Formel

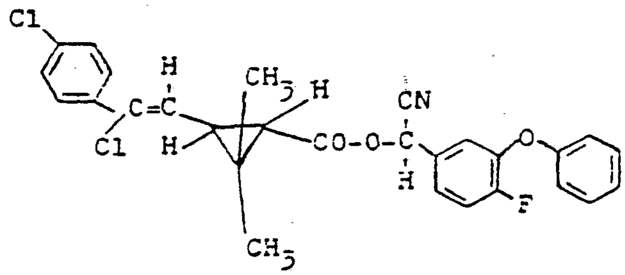

(Ib)

3. (±)-trans-3-(E-2-chlor-2-(4-chlor-phenyl)-vinyl)-2,2-dimethyl-cyclopropancarbonsäure-(±)-α-cyano-3-phenoxy-4-fluor-benzylester der Formel

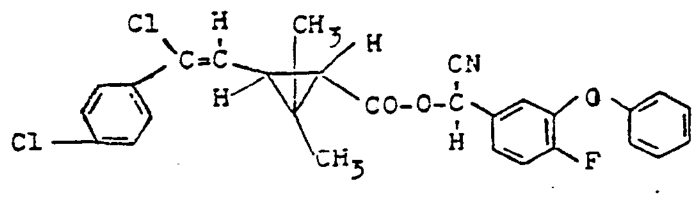

(Ia)

4. Verfahren zur Herstellung des Isomerengemisches (±)-trans-3-(E,Z-2-Chlor-2-(4-chlor-phenyl)-vinyl)-2,2-dimethyl-cyclopropancarbonsäure-(±)-α-cyano-3-phenoxy-4-fluor-benzylester, dadurch gekennzeichnet, daß man das E,Z-Isomerengemisch (±)-trans-3-(E,Z-2-Chlor-2-(4-chlor-phenyl)-vinyl)-cyclopropan-1-carbonsäurechlorid der Formel

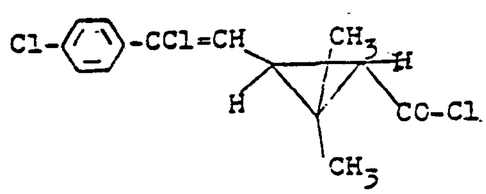

(II)

mit 3-Phenoxy-4-fluor-benzaldehyd in Gegenwart von wenigstens der äquimolaren Menge eines Alkalicyanids, gegebenenfalls in Gegenwart eines Katalysators und gegebenenfalls unter Verwendung von Verdünnungsmitteln bei Temperaturen zwischen 0 und 100 °C umsetzt.

5. Verfahren zur Herstellung von (±)-trans-3-(Z-2-Chlor-2-(4-chlor-phenyl)-vinyl)-2,2-dimethyl-cyclopropancarbonsäure-(±)-α-cyano-3-phenoxy-4-fluor-benzylester der Formel

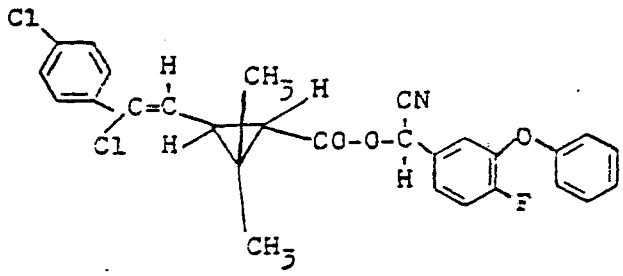

dadurch gekennzeichnet, daß man (±)-trans-3-(Z-2-Chlor-2-(4-chlor-phenyl)-vinyl)-cyclopropan-1-carbonsäurechlorid der Formel

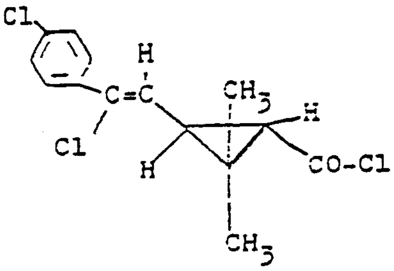

mit 3-Phenoxy-4-fluor-benzaldehyd in Gegenwart von wenigstens der äquimolaren Menge eines Alkalicyanids, gegebenenfalls in Gegenwart eines Katalysators und gegebenenfalls unter Verwendung von Verdünnungsmitteln, bei Temperaturen zwischen 0 und 100 °C umsetzt.

6. Verfahren zur Herstellung von (±)-trans-3-(E-2-Chlor-2-(4-chlor-phenyl)-vinyl)-2,2-dimethyl-cyclopropancarbonsäure-(±)-α-cyano-3-phenoxy-4-fluor-benzylester der Formel

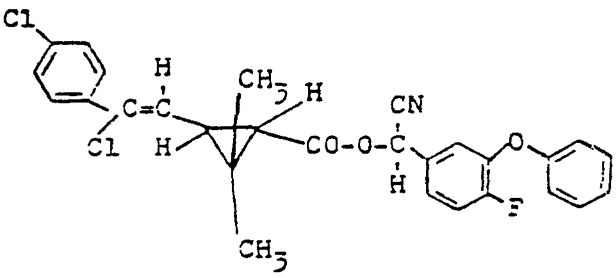

dadurch gekennzeichnet, daß man (±)-trans-3-(E-2-Chlor-2-(4-chlor-phenyl)-vinyl)-cyclopropan-1-carbonsäurechlorid der Formel

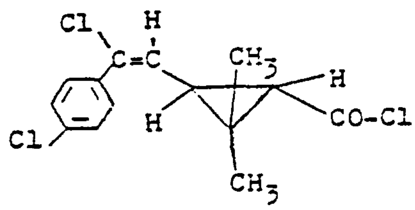

mit 3-Phenoxy-4-fluor-benzaldehyd in Gegenwart von wenigstens der äquimolaren Menge eines Alkalicyanids, gegebenenfalls in Gegenwart eines Katalysators und gegebenenfalls unter Verwendung von Verdünnungsmitteln, bei Temperaturen zwischen 0 und 100 °C umsetzt.

7. Ektoparasitizides Mittel, gekennzeichnet durch einen Gehalt an dem Isomerengemisch (±)-trans-3-(E,Z-2-Chlor-2-(4-chlor-phenyl)-vinyl)-2,2-dimethyl-cyclopropancarbonsäure-(±)-α-cyano-3-phenoxy-4-fluor-benzylester.

8. Ektoparasitizides Mittel, gekennzeichnet durch einen Gehalt an der Verbindung (±)-trans-3-(Z-2-Chlor-2-(4-chlor-phenyl)-vinyl)-2,2-dimethyl-cyclopropancarbonsäure-(±)-α-cyano-3-phenoxy-4-fluor-benzylester.

9. Verwendung von Verbindungen der Ansprüche 1 und 2 zur Bekämpfung von Ektoparasiten.

10. Isomerenmischung bestehend aus (±)-trans-3-(E/Z-, aus (±)-trans-3-(Z- und aus (±)-trans-3-(E-2-chloro-2-(4-chlorophenyl-vinyl)-2,2-dimethyl-cyclopropancarbonsäure der Formel

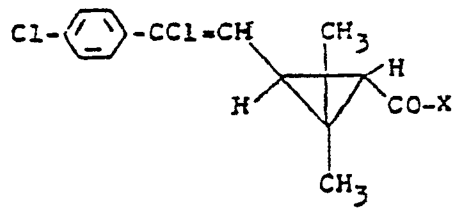

in der

X Chlor, OH oder $C_1$-$C_4$-Alkoxy ist.

**Claims**

1. An isomer mixture of (±)-trans-3-(E/Z-2-chloro-2-(4-chloro-phenyl)-vinyl)-2,2-dimethyl-cyclopropane-carboxylic acid (±)-α-cyano-3-phenoxy-4-fluoro-benzyl ester of the formula

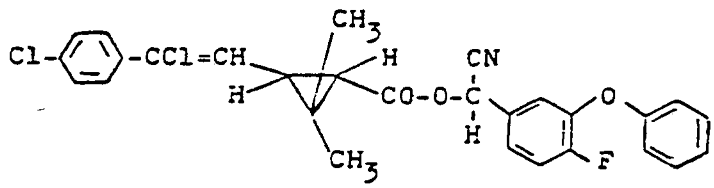

(I)

2. (±)-trans-3-(Z-2-Chloro-2-(4-chloro-phenyl)-vinyl)-2,2-dimethyl-cyclopropanecarboxylic acid (±)-α-cyano-3-phenoxy-4-fluoro-benzyl ester of the formula

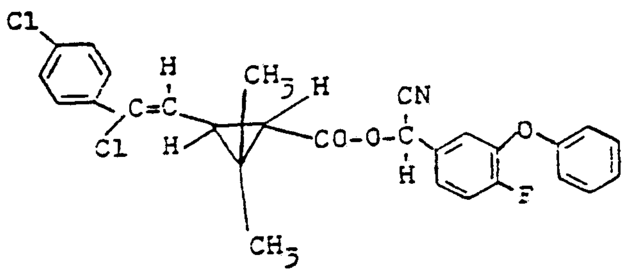

(Ib)

3. (±)-trans-3-(E-2-chloro-2-(4-chloro-phenyl)-vinyl)-2,2-dimethyl-cyclopropanecarboxylic acid (±)-α-cyano-3-phenoxy-4-fluoro-benzyl ester of the formula

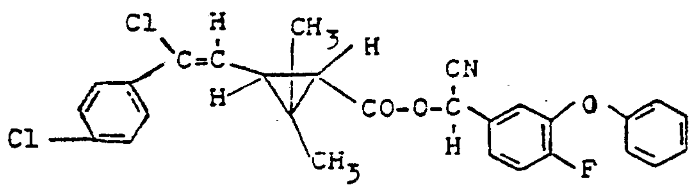

(Ia)

4. A process for the preparation of the isomer mixture of (±)-trans-3-(E/Z-2-chloro-2-(4-chloro-phenyl)-vinyl)-2,2-dimethyl-cyclopropanecarboxylic acid (±)-α-cyano-3-phenoxy-4-fluoro-benzyl ester characterised in that the E/Z-isomer mixture of (±)-trans-3-(E/Z-2-chloro-2-(4-chloro-phenyl)-vinyl)-cyclopropane-1-carboxylic acid chloride, of the formula

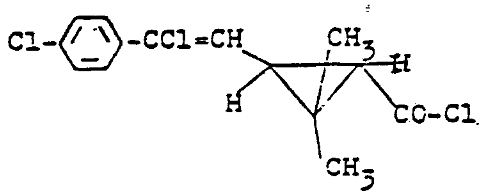

(II)

is reacted with 3-phenoxy-4-fluoro-benzaldehyde in the presence of at least an equimolar amount of an alkali metal cyanide, if appropriate in the presence of a catalyst and if appropriate using diluents, at temperatures between 0° and 100 °C.

5. A process for the preparation of (±)-trans-3-(Z-2-Chloro-2-(4-chloro-phenyl)-vinyl)-2,2-dimethyl-cyclopropanecarboxylic acid (±)-α-cyano-3-phenoxy-4-fluoro-benzyl ester of the formula

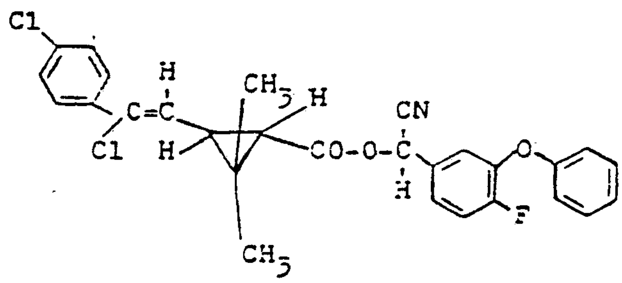

characterised in that (±)-trans-3-(Z-2-chloro-2-(4-chlorophenyl)-vinyl)-cyclopropane-1-carboxylic acid chloride, of the formula

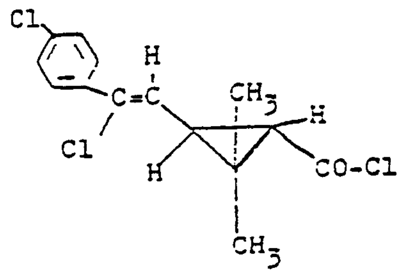

is reacted with 3-phenoxy-4-fluoro-benzaldehyde in the presence of at least an equimolar amount of an alkali metal cyanide, if appropriate in the presence of a catalyst and if appropriate using diluents, at temperatures between 0° and 100 °C.

6. A process for the preparation of (±)-trans-3-(E-2-Chloro-2-(4-chloro-phenyl)-vinyl)-2,2-dimethyl-cyclopropanecarboxylic acid (±)-α-cyano-3-phenoxy-4-fluoro-benzyl ester of the formula

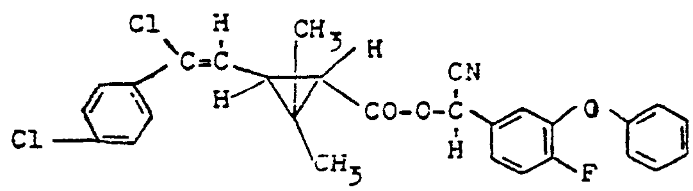

characterised in that (±)-trans-3-(E-2-chloro-2-(4-chloro-phenyl)-vinyl)-cyclopropane-1-carboxylic acid chloride, of the

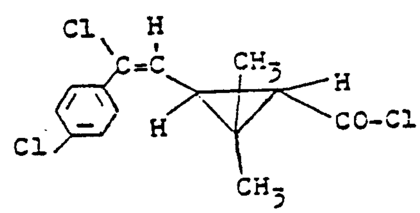

is reacted with 3-phenoxy-4-fluoro-benzaldehyde in the presence of at least an equimolar amount of an alkali metal cyanide, if appropriate in the presence of a catalyst and if appropriate using diluents, at temperatures between 0° and 100 °C.

7. Ectoparasitic composition, characterised in that it contains the isomer mixture of (±)-trans-3-(E/Z-2-chloro-2-(4-chloro-phenyl)-vinyl)-2,2-dimethyl-cyclopropane-carboxylic acid (±)-α-cyano-3-phenoxy-4-fluoro-benzyl ester.

8. Ectoparasitic composition, characterised in that it contains the compound (±)-trans-3-(Z-2-Chloro-2-(4-chloro-phenyl)-vinyl)-2,2-dimethyl-cyclopropanecarboxylic acid (±)-α-cyano-3-phenoxy-4-fluoro-benzyl ester.

9. Use of compounds of Claims 1 and 2 for combating ectoparasites.

10. Isomer mixture consisting of (±)-trans-3-(E/Z-, of (±)-trans-3-(Z- and of (±)-trans-3-(E-2-chloro-2-(4-chlorophenyl-vinyl)-2,2-dimethyl-cyclopropanecarboxylic acid of the formula

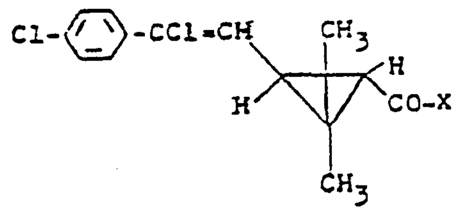

in which

X is chlorine, OH or $C_1$-$C_4$-alkoxy.

## Revendications

1. Mélange d'isomères d'ester de (±)-α-cyano-3-phénoxy-4-fluorobenzyle de l'acide (±)-trans-3-(E,Z-2-chloro-2-(4-chlorophényl)-vinyl)-2,2-diméthylcyclopropanecarboxylique de formule

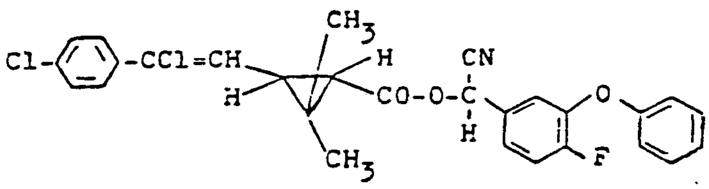

(I)

2. L'ester de (±)-α-cyano-3-phénoxy-4-fluoro-benzyle de l'acide (±)-trans-3-(Z-2-chloro-2-(4-chloro-phényl)-vinyl)-2,2-diméthylcyclopropanecarboxylique de formule

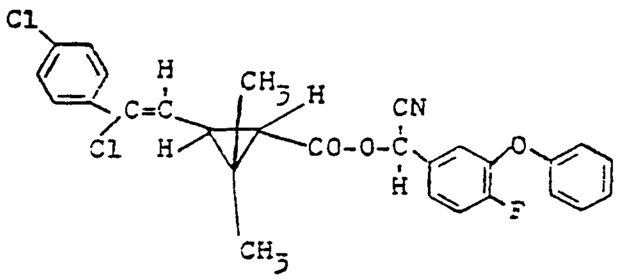

(Ib)

3. L'ester de (±)-α-cyano-3-phénoxy-4-fluoro-benzyle de l'acide (±)-trans-3-(E-2-chloro-2-(4-chloro-phényl)-vinyl-2,2-diméthylcyclopropanecarboxylique de formule

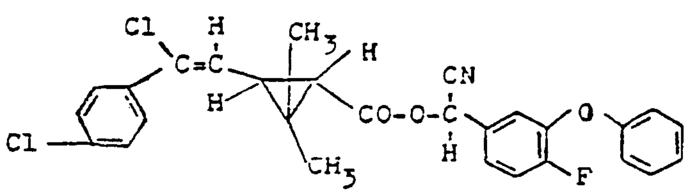

(Ia)

4. Procédé de production du mélange d'isomères d'ester de (±)-α-cyano-3-phénoxy-4-fluorobenzyle de l'acide (±)-trans-3-(E,Z-2-chloro-2-(4-chlorophényl)-vinyl)-2,2-diméthylcyclopropanecarboxylique, caractérisé en ce qu'on fait réagir le mélange d'isomères E,Z du chlorure d'acide (±)-trans-3-(E,Z-2-chloro-2-(4-chlorophényl)-vinyl)-cyclopropane-1-carboxylique de formule :

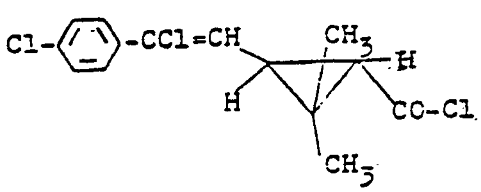

(II)

avec le 3-phénoxy-4-fluorobenzaldéhyde en présence de la quantité au moins équimolaire d'un cyanure alcalin, le cas échéant en présence d'un catalyseur et en utilisant éventuellement des diluants, à des températures comprises entre 0 et 100 °C.

5. Procédé de production de l'ester de (±)-α-cyano-3-phénoxy-4-fluorobenzyle de l'acide (±)-trans-3-(Z-2-chloro-2-(4-chlorophényl)-vinyl)-2,2-diméthylcyclopropanecarboxylique de formule

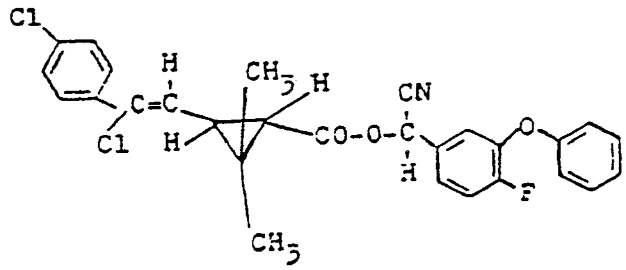

caractérisé en ce qu'on fait réagir le chlorure d'acide (±)-trans-3-(Z-2-chloro-2-(4-chlorophényl)-vinyl)-cyclopropane-1-carboxylique de formule :

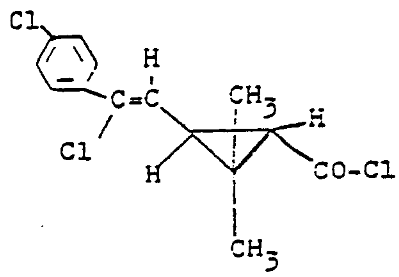

avec le 3-phénoxy-4-fluorobenzaldéhyde en présence de la quantité au moins équimolaire d'un cyanure alcalin, le cas échéant en présence d'un catalyseur et en utilisant éventuellement des diluants, à des températures comprises entre 0 et 100 °C.

6. Procédé de production de l'ester de (±)-α-cyano-3-phénoxy-4-fluorobenzyle de l'acide (±)-trans-3-(E-2-chloro-2-(4-chlorophényl)-vinyl)-2,2-diméthylcyclopropanecarboxylique de formule :

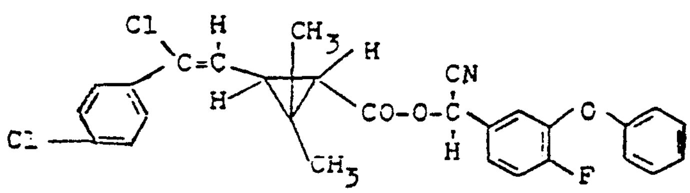

caractérisé en ce qu'on fait réagir le chlorure d'acide (±)-trans-3-(E-2-chloro-2-(4-chlorophényl)-vinyl)-cyclopropane-1-carboxylique de formule :

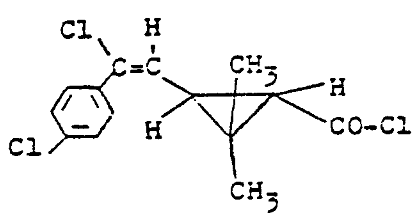

avec le 3-phénoxy-4-fluorobenzaldéhyde en présence de la quantité au moins équimolaire d'un cyanure alcalin, le cas échéant en présence d'un catalyseur et en utilisant éventuellement des diluants, à des températures comprises entre 0 et 100 °C.

7. Composition ectoparasiticide, caractérisée par une teneur en le mélange d'isomères de l'ester de (±)-α-cyano-3-phénoxy-4-fluorobenzyle de l'acide (±)-trans-3-(E,Z-2-chloro-2-(4-chlorophényl)-vinyl)-2,2-diméthylcyclopropanecarboxylique.

8. Composition ectoparasiticide, caractérisée par une teneur en le composé constituant l'ester de (±)-α-cyano-3-phénoxy-4-fluorobenzyle de l'acide (±)-trans-3-(Z-2-chloro-2-(4-chlorophényl)-vinyl)-2,2-diméthylcyclopropanecarboxylique.

9. Utilisation de composés des revendications 1 et 2, dans la lutte contre des ectoparasites.

10. Mélange d'isomères formé de l'acide (±)-trans-3-(E/Z-, de l'acide (±)-trans-3-(Z- et de l'acide (±)-trans-3-(E-2-chloro-2-(4-chlorophényl-vinyl)-2,2-diméthylcyclopropanecarboxylique de formule :

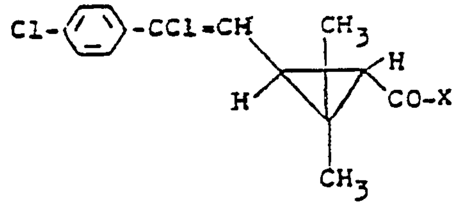

dans laquelle X est le chlore, le groupe OH ou un groupe alkoxy en $C_1$ à $C_4$.